# EUROPEAN PATENT SPECIFICATION

(11) **EP 4 120 792 B1**
(45) Date of publication and mention of the grant of the patent: **01.10.2025**
(21) Application number: 21768261.6
(22) Date of filing: 23.02.2021
(51) Int. Cl.: H04W 76/40, H04W 4/06, H04W 76/11, H04W 72/30

(54) **METHODS AND APPARATUS FOR MBS CONFIGURATION AND RECEPTION IN MOBILE COMMUNICATION SYSTEM**
VERFAHREN UND VORRICHTUNG ZUR MBS-KONFIGURATION UND EMPFANG IN EINEM MOBILKOMMUNIKATIONSSYSTEM
PROCÉDÉS ET APPAREIL DE CONFIGURATION ET DE RÉCEPTION MBS DANS UN SYSTÈME DE COMMUNICATION MOBILE

(30) Priority: 13.03.2020 KR 20200031307
(43) Date of publication of application: 18.01.2023
(73) Proprietor: Samsung Electronics Co., Ltd., Gyeonggi-do 16677 (KR)
(72) Inventor: BAEK, Sangkyu, Suwon-si, Gyeonggi-do 16677 (KR); KIM, Soenghun, Suwon-si, Gyeonggi-do 16677 (KR)
(74) Representative: Nederlandsch Octrooibureau
(86) International application number: PCT/KR2021/002245
(87) International publication number: WO 2021/182770

(56) References cited:
- EP-A1- 2 802 163
- EP-A1- 2 854 465
- WO-A1-2018/032469
- WO-A1-2019/194597
- KR-A- 20180 050 128
- KR-A- 20200 016 776
- US-A1- 2018 109 992
- ANONYMOUS: "3rd Generation Partnership Project; Technical Specification Group Services and System Aspects; Study on architectural enhancements for 5G multicast-broadcast services (Release 17)", 3GPP STANDARD; TECHNICAL REPORT; 3GPP TR 23.757, vol. SA WG2, no. V0.3.0, 29 January 2020 (2020-01-29), pages 1 - 37, XP051860857

## Description

### TECHNICAL FIELD

The disclosure relates to methods of a user equipment (UE) and a base station for multicast and broadcast service (MBS) configuration and reception in a mobile communication system and a user equipment.

### BACKGROUND ART

To meet increasing demand with respect to wireless data traffic after the commercialization of 4^{th} generation (4G) communication systems, efforts have been made to develop 5^{th} generation (5G) or pre-5G communication systems. For this reason, 5G or pre-5G communication systems are called 'beyond 4G network' communication systems or 'post long term evolution (post-LTE)' systems. 5G communication systems defined by the 3^{rd} Generation Partnership Project (3GPP) are called new radio (NR) systems. To achieve high data rates, implementation of 5G communication systems in an ultra-high frequency or millimeter-wave (mmWave) band (e.g., a 60-GHz band) is being considered. To reduce path loss and increase coverage of radio waves in the ultra-high frequency band for 5G communication systems, various technologies such as beamforming, massive multiple-input and multiple-output (massive MIMO), full-dimension MIMO (FD-MIMO), array antennas, analog beamforming, and large-scale antennas are studied and applied to NR systems. To improve system networks for 5G communication systems, various technologies such as evolved small cells, advanced small cells, cloud radio access networks (cloud RAN), ultra-dense networks, device-to-device (D2D) communication, wireless backhaul, moving networks, cooperative communication, coordinated multi-points (CoMP), and received-interference cancellation have been developed. In addition, for 5G systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA), have been developed.

The Internet has evolved from a human-based connection network, where humans create and consume information, to the Internet of things (IoT), where distributed elements such as objects exchange information with each other to process the information. Internet of everything (IoE) technology has emerged, in which the loT technology is combined with, for example, technology for processing big data through connection with a cloud server. To implement the loT, various technological elements such as sensing technology, wired/wireless communication and network infrastructures, service interface technology, and security technology are required and, in recent years, technologies related to sensor networks, machine-to-machine (M2M) communication, and machine-type communication (MTC) for connecting objects have been studied. In the loT environment, intelligent Internet technology (IT) services may be provided to collect and analyze data obtained from connected objects to create new value in human life. As existing information technology (IT) and various industries converge and combine with each other, the loT may be applied to various fields such as smart homes, smart buildings, smart cities, smart cars or connected cars, smart grids, health care, smart home appliances, and advanced medical services.

Various attempts are being made to apply 5G communication systems to the loT network. For example, technologies related to sensor networks, M2M communication, and MTC communication are being implemented by using 5G communication technology including beamforming, MIMO, and array antennas. Application of a cloud RAN as the above-described big data processing technology may be an example of convergence of 5G communication technology and loT technology.

Published application EP 2 854 465 describes a MTC application with a large number of terminals, wherein a plurality of MTC terminals may be grouped into a group to be scheduled. The base station may schedule a terminal or a plurality of terminals in a group through control information for downlink data group scheduling, wherein a CRC of the control information for down link data group scheduling is scrambled by a group-based RNTI.

Published application WO 2018 / 032 469 discloses a system for single cell multicast traffic channel (SC-MTCH) and control channel (SC-MCCH). The mobile device uses a group specific radio network temporary identifier (g-RNTI) and a single cell RNTI (SC-RNTI) to identify downlink grants on the PDCCH for communications on the SC-MTCH and the SC-MCCH, respectively.

Published application EP 2 802 163 A1 discloses a data transmission method and device, used to solve the problem of achieving air interface group calling and multicasting when a base station is connected to a network side via an IP interface.

### DISCLOSURE

### TECHNICAL SOLUTION

The invention is defined by the appended independent claims.

### DESCRIPTION OF DRAWINGS

FIG. 1 is a diagram showing an operating method for multicast and broadcast service (MBS) communication, according to an embodiment of the disclosure.
FIG. 2 is a flowchart of a configuration procedure for performing MBS communication, according to an embodiment of the disclosure.
FIG. 3 is a flowchart of a method of configuring a cause of a radio resource control (RRC) setup request, according to an embodiment of the disclosure.
FIG. 4 is a flowchart of a method of configuring a cause of an RRC setup request, according to an embodiment of the disclosure.
FIG. 5 is a diagram for describing a radio network temporary identity (RNTI) configuration method for performing MBS communication, according to an embodiment of the disclosure.
FIG. 6 is a diagram for describing a search space configuration method for performing MBS communication, according to an embodiment of the disclosure.
FIG. 7 is a flowchart of a method, performed by a user equipment (UE), of requesting and configuring an MBS service, according to an embodiment of the disclosure.
FIG. 8 is a block diagram of a base station according to an embodiment of the disclosure.
FIG. 9 is a block diagram of a UE according to an embodiment of the disclosure.

### MODE FOR INVENTION

In the following description of the disclosure, a detailed description of known functions or configurations incorporated herein will be omitted when it may make the subject matter of the disclosure unclear. Hereinafter, the disclosure will be described in detail by explaining embodiments of the disclosure with reference to the attached drawings.

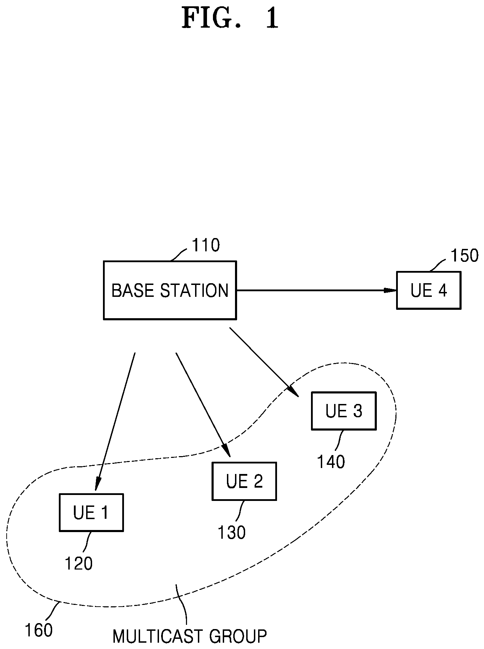

FIG. 1 is a diagram showing an operating method for multicast and broadcast service (MBS) communication, according to an embodiment of the disclosure. The MBS communication refers to a communication method between one transmitter and a plurality of receivers in a mobile communication system. Herein, the transmitter may be a base station, and each receiver may be a user equipment (UE). However, the transmitter is not limited thereto and may be a UE.

The embodiment of FIG. 1 shows an example in which MBS communication is performed between a base station 110 serving as the transmitter and UEs 120, 130, 140, and 150 serving as the receivers. The MBS communication may be broadcast for a plurality of unspecified receivers, or multicast for a plurality of specific receivers. When communication is performed in a multicast manner, the base station may configure reception of multicast packets only for specific UEs. To this end, a set of UEs for specific multicast communication may be configured, and such UEs are referred to as a multicast group 160 in the embodiment of FIG. 1.

The UEs in the multicast group may be allocated the same group-radio network temporary identity (G-RNTI) to receive data allocated with the G-RNTI. The embodiment of FIG. 1 assumes that the UE 1 120, the UE 2 130, and the UE 3 140 are configured as one multicast group and are allocated the G-RNTI to receive data from the base station 110 in a multicast manner. The UE 4 150, which is not included in the multicast group so as not to be allocated the G-RNTI, may not receive the data received by the UE 1 120, the UE 2 130, and the UE 3 140 from the base station.

One or more multicast groups may be configured in the coverage of the base station 110, and each multicast group may be identified by a G-RNTI. One UE may be allocated one or more G-RNTIs from the base station 110. Using a G-RNTI value allocated in an RRC connected mode, the UE may receive multicast data in an RRC idle mode or an RRC inactive mode as well as the RRC connected mode. The G-RNTI is included and configured in at least one of an RRC reconfiguration message, as claimed, an RRC setup message, not according to the claimed invention, and an RRC reestablishment message in the RRC connected mode of the UE, not according to the claimed invention.

However, the G-RNTI is not limited thereto, and may be included in a system information block (SIB) as a G-RNTI value receivable by the UE and be transmitted from the base station. The UE having been allocated the G-RNTI value may apply the G-RNTI thereafter.

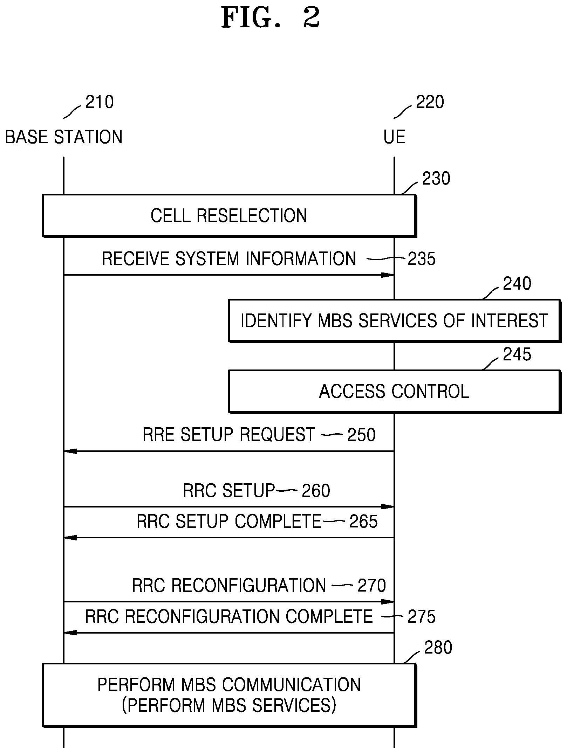

FIG. 2 is a flowchart of a configuration procedure for performing MBS communication, according to an embodiment of the disclosure. A UE 220 which is not RRC-connected to a base station 210 may select a base station to request an MBS service to perform MBS communication. In this case, the UE 220 may perform a cell selection or reselection procedure for receiving synchronization signals transmitted from base stations and selecting a base station corresponding to the highest received power (operation 230). The embodiment of FIG. 2 assumes that a UE having transitioned from an initial RRC connected mode to an RRC idle mode or an RRC inactive mode performs a cell reselection operation to select a cell.

Thereafter, the UE 220 may receive a SIB from the selected cell (operation 235). In this case, when the UE 220 desires to receive an MBS service, the UE 220 may receive, among SIBS, a SIB including MBS information. The SIB including the MBS information may include a list of MBS services being already provided or providable from each serving cell.

The list of MBS services being already provided or providable from each serving cell may be referred to as an AvailableMBSList. The AvailableMBSList may include MBS session information. The MBS session information may include temporary mobile group identity (TMGI) values for identifying groups, and MBS sessionID values. Each TMGI value may include a public land mobile network ID (plmn-id) for identifying a mobile carrier, and a servicelD for identifying a service provided by the mobile carrier. When the above-mentioned types of information are combined, the AvailableMBSList may have a structure shown in the following example.
- AvailableMBSList = MBSSessionlnfoList
   ▪ MBSSessionlnfoList = Sequence of (tmgi, sessionlD)
      ◆ tmgi = (plmn-id, servicelD)

When all UEs request RRC configuration to receive all MBS services, the base station may be overloaded due to instantaneous access by many UEs. Therefore, access control for MBS services may be required. To this end, an access category value and a uac-BarringForAccessldentity for access control may be configured in each TMGI. Using the access category and the uac-BarringForAccessldentity configured as described above, the number of access requests to the base station may be controlled for each TMGI. Although the embodiment of FIG. 2 assumes that the UE 220 receives the SIB including the MBS information, the MBS information is not limited thereto and may be included in a downlink (DL) information transfer message.

The UE 220 having received the SIB including the MBS information may identify an MBS service of interest in the list of MBS services being already provided or providable from each serving cell (operation 240). The UE 220 may determine which MBS service the UE 220 is interested in, based on an MBS service required by an application of the UE 220 or other conditions. The UE 220 may identify the MBS service based on the TMGI. That is, the UE 220 may check whether the TMGI of the MBS service that the UE 220 desires to receive (or the UE 220 is interested in) is included in the SIB including the MBS information. Specifically, the UE 220 may check whether the TMGI of the MBS service that the UE 220 desires to receive is included in the AvailableMBSList of the SIB including the MBS information. When the TMGI of the MBS service that the UE 220 desires to receive is included in the SIB including the MBS information, the UE 220 may perform RRC connection setup to receive the MBS service.

In this case, to determine whether to start RRC connection setup, the UE 220 may perform access control (operation 245). Based on a plmn-ID included in the TMGI of the MBS service to be received, the UE 220 may perform access control by using unified access control (UAC)-Barring information for the plmn-ID. It may be determined whether access for a uac-BarringForAccessldentity and an access category of the MBS service that the UE 220 desires to receive is allowed. When access for the MBS service is allowed, the UE 220 may start an RRC connection request procedure.

When access by the UE 220 to receive the MBS service is allowed, the UE 220 may transmit an RRC setup request message to the base station 210 (operation 250). However, the message is not limited thereto and an RRC reestablishment request message may also be used for the same purpose as the RRC setup request message. The RRC setup request message or the RRC reestablishment request message is a general message usable for the UE 220 to transition to an RRC connected mode, and thus may include a cause value indicating for what purpose the UE 220 desires to transition to the RRC connected mode. In this case, when the UE 220 desires to receive an MBS service, the UE 220 may transmit, to the base station 210, the RRC setup request message or the RRC reestablishment request message including MBS configuration as a cause value. However, when the RRC setup request message or the RRC reestablishment request message is not to receive an MBS service, the UE 220 may transmit the RRC setup request message or the RRC reestablishment request message by using a cause value transmitted from a higher layer.

The base station 210 may transmit an RRC setup message to the UE 220 to transition the UE 220 to the RRC connected mode (operation 260). However, the message is not limited thereto and an RRC reestablishment message may also be used for the same purpose as the RRC setup message. When the UE 220 receives the RRC setup message or the RRC reestablishment message, a signaling radio bearer 1 (SRB1) may be configured based on SRB1 configuration information included in the received message. The SRB1 may be a radio bearer for exchanging RRC messages between the base station 210 and the UE 220.

The UE 220 may apply the configuration information included in the RRC setup message or the RRC reestablishment message, and transmit an RRC setup complete message or an RRC reestablishment complete message to the base station 210 to notify that the configuration received from the base station 210 is successfully applied (operation 265). Besides, the RRC setup complete message or the RRC reestablishment complete message transmitted in operation 265 may include a list of MBS services that the UE 220 desires to receive. The list of MBS services may be a list including TMGI values corresponding to the MBS services that the UE 220 desires to receive. In this case, the TMGIs including the list of MBS services may include all or some of the TMGls included in the list of MBS services being already provided or providable from each serving cell, which are included in the SIB or the DL information transfer message transmitted from the base station 210 in operation 235.

In operation 265, because SRB1 is configured and the list of MBS services that the UE 220 desires to receive is provided to the base station 210, the base station 210 may configure reception of the MBS services for the UE 220 based on the received information. The MBS services are configured using an RRC reconfiguration message transmitted from the base station 210 to the UE 220 (operation 270). The RRC reconfiguration message may include, for example, configuration information of a signaling radio bearer 2 (SRB2) used to transmit or receive non-access stratum (NAS) messages, a data radio bearer (DRB) used to transmit or receive data, and a point to multipoint (PTM) DRB to be used for multicast transmission. Herein, the PTM DRB may be configured without being distinguished from a normal DRB, or configured by a received G-RNTI. Besides, a radio link control (RLC) bearer to transmit the configured radio bearer may be configured, and a radio bearer to be connected to the RLC bearer may also be configured. Herein, a G-RNTI for receiving multicast data by UEs belonging to a multicast group may also be configured. The G-RNTI is an RNTI configured to receive transport blocks (TBs), and may be used to address scheduling information of a physical downlink shared channel (PDSCH). The G-RNTI may be configured per media access control (MAC) entity, or configured per bandwidth part (BWP). When the G-RNTI is configured per BWP, the configured G-RNTI may be used only to receive PDSCH resources of the BWP. That is, the G-RNTI may not be used in other BWPs. To this end, the G-RNTI may be included and configured in a BWP-Downlink configuration field of an RRC message. A BWP ID to be used to configure the G-RNTI may also be configured. In another embodiment, the G-RNTI may be configured per cell. When the G-RNTI is configured per cell, the configured G-RNTI may be used only to receive PDSCH resources of the cell. That is, the G-RNTI may not be used in other cells. To this end, the G-RNTI is included and configured in a cell configuration field of an RRC message. A cell ID to be used to configure the G-RNTI may also be configured.

A BWP and a search space may be separately configured to receive an MBS service. Configuration information of a BWP and a search space for receiving a specific MBS service is transmitted from the base station 210 to the UE 220, and an MBS BWP and an MBS search space are included in the configuration information. Herein, the MBS BWP may refer to a BWP to which an allocated G-RNTI is applied. According to an embodiment, a BWP configured by a BWP-Downlink configuration field including a G-RNTI may be the MBS BWP. The MBS search space may be a search space configured by search space configuration information including a downlink control information (DCI) format for MBS reception, or a search space configured by search space configuration information including an indicator of a search space for MBS reception. For example, the search space configuration information may include a 1-bit indicator indicating whether the search space is an MBS search space. When the indicator indicates an MBS search space, the search space may be the MBS search space, and be used as a search space for monitoring a G-RNTI for MBS reception.

When information included in the RRC reconfiguration message of operation 270 is applied by the UE 220, the UE 220 may transmit an RRC reconfiguration complete message to the base station 210 to notify that the information of the RRC reconfiguration message is applied (operation 275). As such, the UE 220 may receive broadcast or multicast packets by performing MBS communication. That is, the UE 220 may receive the MBS services from the base station 210 (operation 280).

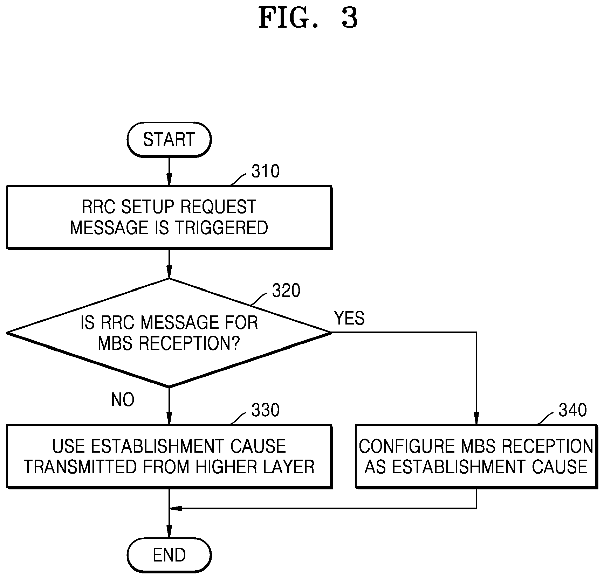

FIG. 3 is a flowchart of a method of configuring a cause of an RRC setup request, according to an embodiment of the disclosure. When access by a UE to receive an MBS service is allowed, the UE may transmit an RRC setup request message to a base station. However, the message is not limited thereto and an RRC reestablishment request message may also be used for the same purpose as the RRC setup request message. The RRC setup request message or the RRC reestablishment request message is a general message usable for the UE to transition to an RRC connected mode, and thus may include a cause value indicating for what purpose the UE desires to transition to the RRC connected mode. As described above, when the RRC setup request message or the RRC reestablishment request message is triggered (operation 310), the UE may check for what reason the message is triggered (operation 320). When the message is not an RRC setup request message or an RRC reestablishment request message for MBS reception, the UE may transmit the RRC setup request message or the RRC reestablishment request message by using an establishment cause transmitted from a higher layer (operation 330). When the message is an RRC setup request message or an RRC reestablishment request message for MBS reception, the UE may transmit the message by using MBS reception as an establishment cause (operation 340). Using the cause value configured as described above, the base station may know for what purpose the UE desires to transition to the RRC connected mode, and transmit an appropriate configuration message thereafter.

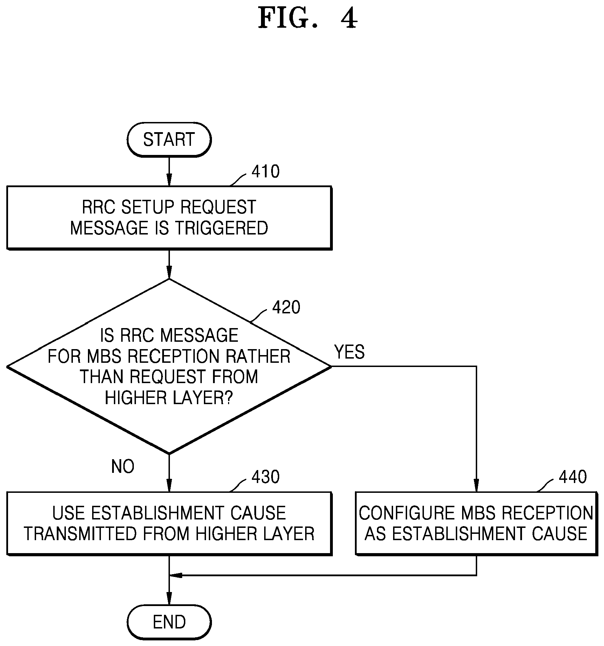

FIG. 4 is a flowchart of a method of configuring a cause of an RRC setup request, according to an embodiment of the disclosure. When access by a UE to receive an MBS service is allowed, the UE may transmit an RRC setup request message to a base station. However, the message is not limited thereto and an RRC reestablishment request message may also be used for the same purpose as the RRC setup request message. The RRC setup request message or the RRC reestablishment request message is a general message usable for the UE to transition to an RRC connected mode, and thus may include a cause value indicating for what purpose the UE desires to transition to the RRC connected mode. As described above, when the RRC setup request message or the RRC reestablishment request message is triggered (operation 410), the UE may check for what reason the message is triggered (operation 420). When the message is not an RRC setup request message or an RRC reestablishment request message for MBS reception rather than a request from a higher layer, the UE may transmit the RRC setup request message or the RRC reestablishment request message by using an establishment cause transmitted from the higher layer (operation 430). When the message is an RRC setup request message or an RRC reestablishment request message for MBS reception rather than a request from a higher layer, the UE may transmit the message by using MBS reception as an establishment cause (operation 440). As described above, the UE initially checks whether the RRC setup request message or the RRC reestablishment request message is based on a request from a higher layer, and transmits the message by using an establishment cause transmitted from the higher layer when the message is based on the request from the higher layer. When the RRC setup request message or the RRC reestablishment request message is not based on a request from a higher layer, the UE may check whether the message is for MBS reception, and transmit message by using MBS reception as an establishment cause. Using the cause value configured as described above, the base station may know for what purpose the UE desires to transition to the RRC connected mode, and transmit an appropriate configuration message thereafter.

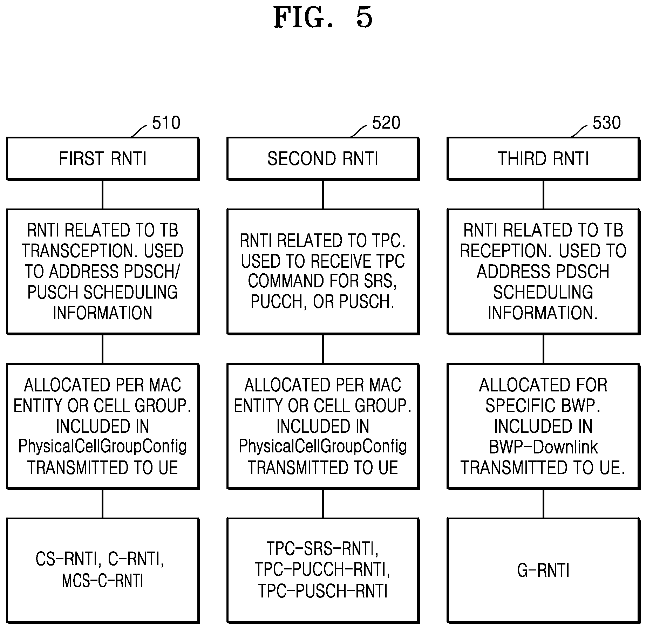

FIG. 5 is a diagram for describing an RNTI configuration method for performing MBS communication, according to an embodiment of the disclosure. An RNTI is an identity configured for a UE to transmit, receive, or transmit and receive data, and a plurality of RNTIs may be configured for one UE. The RNTIs may be configured for different purposes. The RNTIs may include a cell-RNTI (C-RNTI), a configured scheduling-RNTI (CS-RNTI), and a group-RNTI (G-RNTI). The RNTIs may be of three types.

A first RNTI 510 refers to an RNTI related to transception of TBs. An RNTI belonging to the first RNTI 510 is used to address scheduling information of a PDSCH or a physical uplink shared channel (PUSCH). That is, resources allocated with the first RNTI 510 refers to TB resources mapped to PDSCH or PUSCH resources. The first RNTI 510 may be allocated per MAC entity or cell group. That is, when the first RNTI 510 is allocated, it means that the first RNTI 510 is applied to a corresponding MAC entity or a corresponding cell group. To this end, the first RNTI 510 may be included and configured in PhysicalCellGroupConfig. A CS-RNTI, a C-RNTI, and a modulation and coding scheme-C-RNTI (MCS-C-RNTI) may belong to the first RNTI 510.

A second RNTI 520 refers to an RNTI related to transmit power control (TPC). An RNTI belonging to the second RNTI 520 is used to receive a TPC command for a sounding reference signal (SRS), a physical uplink control channel (PUCCH), or a PUSCH. The second RNTI 520 may be allocated per MAC entity or cell group. That is, when the second RNTI 520 is allocated, it means that the second RNTI 520 is applied to a corresponding MAC entity or a corresponding cell group. To this end, the second RNTI 520 may be included and configured in PhysicalCellGroupConfig. A TPC-SRS-RNTI, a TPC-PUCCH-RNTI, and a TPC-PUSCH-RNTI may belong to the second RNTI 520.

A third RNTI 530 refers to an RNTI related to reception of TBs. An RNTI belonging to the third RNTI 530 is used to address scheduling information of a PDSCH. That is, resources allocated with the third RNTI 530 refers to TB resources mapped to PDSCH resources. The third RNTI 530 may be allocated for a specific BWP or a specific cell. That is, when the third RNTI 530 is allocated, it means that the third RNTI 530 is applied to a corresponding BWP or a corresponding cell. When allocated for a specific BWP, the third RNTI 530 may be included in a BWP-Downlink configuration and be transmitted to and configured for a UE. A G-RNTI may belong to the third RNTI 530.

According to another embodiment, the third RNTI 530 may be an RNTI related to transception of TBs. In this case, an RNTI belonging to the third RNTI 530 is used to address scheduling information of a PDSCH or a PUSCH. That is, resources allocated with the third RNTI 530 refers to TB resources mapped to PDSCH or PUSCH resources. The third RNTI 530 may be allocated for a specific BWP or a specific cell. That is, when the third RNTI 530 is allocated, it means that the third RNTI 530 is applied to a corresponding BWP or a corresponding cell. When allocated for a specific BWP, the third RNTI 530 may be included in a BWP-Downlink configuration or a BWP-Uplink configuration and be transmitted to and configured for a UE. A G-RNTI may belong to the third RNTI 530.

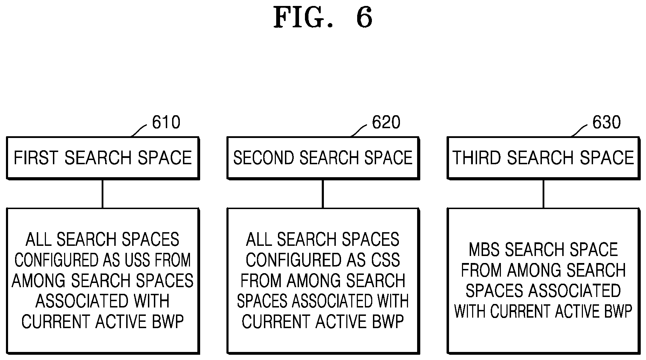

FIG. 6 is a diagram for describing a search space configuration method for performing MBS communication, according to an embodiment of the disclosure. A BWP and a search space may be separately configured to receive an MBS service. Configuration information of a BWP and a search space for receiving a specific MBS service may be transmitted from a base station to a UE, and an MBS BWP and an MBS search space may be included in the configuration information. Herein, the MBS BWP may refer to a BWP to which an allocated G-RNTI is applied. According to an embodiment, a BWP configured by a BWP-Downlink configuration field including a G-RNTI may be the MBS BWP. In another embodiment, when a G-RNTI is allocated, an ID of a BWP to which the G-RNTI is applied may be included to configure the MBS BWP. The MBS search space may be a search space configured by search space configuration information including a DCI format for MBS reception, or a search space configured by search space configuration information including an indicator of a search space for MBS reception. For example, the search space configuration information may include a 1-bit indicator indicating whether the search space is an MBS search space. When the indicator indicates an MBS search space, the search space may be the MBS search space, and be used as a search space for monitoring a G-RNTI for MBS reception. The search space refers to radio resources where the UE monitors a configured RNTI, and various types of search spaces may be present in a search space determined within an active BWP. The search spaces may be configured for different purposes. The search spaces may be of three types.

A first search space 610 may be a search space configured as a UE-specific search space (USS) from among search spaces associated with a current active BWP. The first search space 610 is for specific UEs, and each UE may check allocated resources by checking an RNTI configured for the first search space 610 in the first search space 610.

A second search space 620 may be a search space configured as a common search space (CSS) from among search spaces associated with a current active BWP. The second search space 620 is a search space shared by a plurality of UEs or all UEs to receive dynamic scheduling of system information or paging messages. However, the second search space 620 may also be used for specific UEs in terms of resource management. Each UE may check allocated resources by checking an RNTI configured for the second search space 620 in the second search space 620.

A third search space 630 is a search space applied for MBS communication, and may be an MBS search space from among search spaces associated with a current active BWP. When the active BWP is a BWP with an RNTI configured for the third search space 630, each UE may check allocated resources by checking the RNTI configured for the third search space 630 in the third search space 630. According to an embodiment, the RNTI configured for the third search space 630 may be a G-RNTI. When the RNTI configured for the third search space 630 is not an RNTI configured for a specific BWP or a specific cell, the UE may check allocated resources by always checking the RNTI configured for the third search space 630 in the third search space 630.

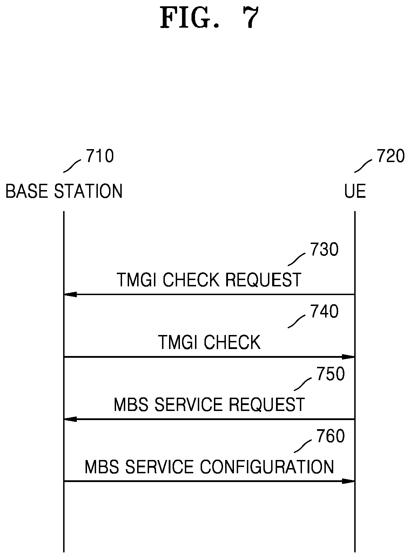

FIG. 7 is a flowchart of a method, performed by a UE 720, of requesting and configuring an MBS service, according to an embodiment of the disclosure. When the UE 720 desires to receive an MBS service, the UE 720 may request a base station 710 for confirmation about whether the MBS service is being already provided or providable from a serving cell of the base station 710. The UE 720 may request confirmation as described above when the UE 720 does not receive, from the base station 710, a list of MBS services being provided or providable from the base station 710, or when the MBS service that the UE 720 desires to receive is not included in the list.

For this purpose, the UE 720 may send a TMGI check request message to the base station 710 to request confirmation about whether a TMGI of the MBS service that the UE 720 desires to receive or is interested in is a TMGI of a service being provided or providable from the base station 710 (operation 730). The TMGI check request message may include a TMGI of an MBS service that the UE 720 desires to receive, a TMGI of an MBS service that the UE 720 is interested in, or a TMGI of an MBS service that the UE 720 desires to request confirmation about whether the MBS service is being provided or providable from the serving cell of the base station 710.

When the TMGI check request message is received, the base station 710 may transmit TMGIs of provided or providable MBS services to the UE 720 by using a TMGI check message (operation 740). The TMGI check message may include TMGIs of MBS services being provided or providable from the serving cell of the base station 710, from among TMGls included in the TMGI check request message transmitted from the UE 720 in operation 730. In another embodiment, regardless of information included in the TMGI check request message of operation 730, TMGIs of MBS services being currently provided or providable from the serving cell of the base station 710 may be transmitted to the UE 720. Upon receiving the TMGI check message of operation 740, the UE 720 may know the MBS services served by the serving cell of the base station 710.

In another embodiment, the operation based on the TMGI check request message may also be performed based on an on-demand system information request message. At this time, the on-demand system information request message may be a request for a SIB including information on MBS services being provided or providable from the serving cell of the base station 710. Upon receiving the on-demand system information request message, instead of the TMGI check message, the base station 710 may transmit a SIB including MBS information (operation 740).

A list of MBS services being already provided or providable from each serving cell may be referred to as an AvailableMBSList. The AvailableMBSList may include MBS session information. The MBS session information may include TMGI values for identifying groups, and MBS sessionID values. Each TMGI value may include a plmn-id for identifying a mobile carrier, and a servicelD for identifying a service provided by the mobile carrier. When the above-mentioned types of information are combined, the AvailableMBSList may have a structure shown in the following example.
- AvailableMBSList = MBSSessionlnfoList
   ▪ MBSSessionlnfoList = Sequence of (tmgi, sessionlD)
      ◆ tmgi = (plmn-id, servicelD)

Thereafter, the UE 720 may transmit an MBS service request message to the base station 710 to request an MBS service that the UE 720 actually desires to receive (operation 750). In this case, the UE 720 may transmit the MBS service request message including a list of MBS services that the UE 720 actually desires to receive. The list of MBS services may be a list including TMGI values corresponding to the MBS services that the UE 720 desires to receive. In this case, the included TMGIs may include all or some of the TMGIs included in the list of MBS services being already provided or providable from each serving cell, which are obtained by the UE 720 in operation 740.

Based on the MBS service request message of operation 750, the base station 710 may transmit an MBS service configuration message to the UE 720 to configure reception of the MBS service (operation 760). The MBS service is configured using an RRC reconfiguration message transmitted from the base station 710 to the UE 720. In the MBS service configuration message, a G-RNTI for allowing UEs belonging to a multicast group to receive multicast data may also be configured. The G-RNTI is an RNTI configured to receive TBs, and is used to address scheduling information of a PDSCH. The G-RNTI may be configured per MAC entity, or configured per BWP. When the G-RNTI is configured per BWP, the configured G-RNTI may be used only to receive PDSCH resources of the BWP. That is, the G-RNTI may not be used in other BWPs. To this end, the G-RNTI may be included and configured in a BWP-Downlink configuration field of an RRC message. A BWP ID to be used to configure the G-RNTI may also be configured. In another embodiment, the G-RNTI may be configured per cell. When the G-RNTI is configured per cell, the configured G-RNTI may be used only to receive PDSCH resources of the cell. That is, the G-RNTI may not be used in other cells. To this end, the G-RNTI is included and configured in a cell configuration field of an RRC message. A cell ID to be used to configure the G-RNTI may also be configured.

A BWP and a search space may be separately configured to receive an MBS service. Configuration information of a BWP and a search space for receiving a specific MBS service is transmitted from the base station 710 to the UE 720, and an MBS BWP and an MBS search space are included in the configuration information. Herein, the MBS BWP may refer to a BWP to which an allocated G-RNTI is applied. According to an embodiment, a BWP configured by a BWP-Downlink configuration field including a G-RNTI may be the MBS BWP. The MBS search space may be a search space configured by search space configuration information including a DCI format for MBS reception, or a search space configured by search space configuration information including an indicator of a search space for MBS reception. For example, the search space configuration information may include a 1-bit indicator indicating whether the search space is an MBS search space. When the indicator indicates an MBS search space, the search space may be the MBS search space, and be used as a search space for monitoring a G-RNTI for MBS reception.

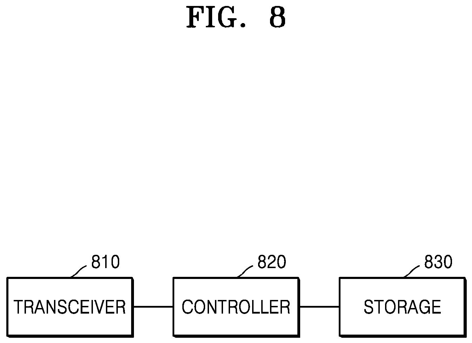

FIG. 8 is a block diagram of a base station according to an embodiment of the disclosure.

Referring to FIG. 8, the base station may include a transceiver 810, a controller 820, and a storage 830. In the disclosure, the controller 820 may be defined as a circuit- or application-specific integrated circuit or at least one processor.

The transceiver 810 may transmit or receive signals to or from other network entities. The transceiver 810 may transmit system information or transmit a synchronization signal or a reference signal to, for example, a UE.

The controller 820 may control overall operations of the base station according to an embodiment of the disclosure. For example, the controller 820 may control the flow of signals between blocks to perform operations based on the flowchart described above.

The storage 830 may store at least one of information transmitted or received through the transceiver 810 and information generated through the controller 820.

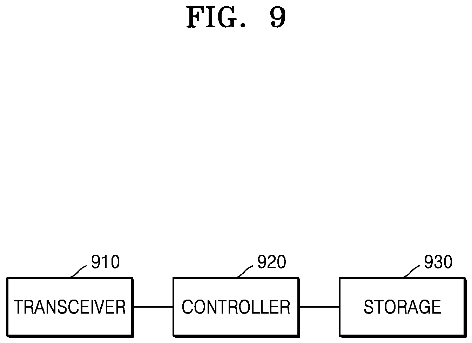

FIG. 9 is a block diagram of a UE according to an embodiment of the disclosure.

Referring to FIG. 9, the UE may include a transceiver 910, a controller 920, and a storage 930. In the disclosure, the controller 920 may be defined as a circuit- or application-specific integrated circuit or at least one processor.

The transceiver 910 may transmit or receive signals to or from other network entities. The transceiver 910 may receive system information or receive a synchronization signal or a reference signal from, for example, a base station.

The controller 920 may control overall operations of the UE according to an embodiment of the disclosure. For example, the controller 920 may control the flow of signals between blocks to perform operations based on the flowchart described above.

The storage 930 may store at least one of information transmitted or received through the transceiver 910 and information generated through the controller 920.

The embodiments disclosed in this specification and the drawings are merely to easily describe technical content of the disclosure and to promote understanding of the disclosure, and do not limit the scope of the disclosure. That is, it will be understood by one of ordinary skill in the art that the embodiments may be modified in various ways without departing from the scope of the disclosure.

## Claims

1. A method performed by a user equipment, UE, in a wireless communication system, the method comprising:
receiving, from a base station, a radio resource control, RRC, reconfiguration message including information indicating a group-radio network temporary identifier, G-RNTI, for a multicast and broadcast service, MBS, wherein the RRC reconfiguration message includes information indicating a bandwidth part, BWP, configured for the MBS, and search space information related to the MBS, and the search space information is associated with the BWP;
identifying scheduling information for a physical downlink shared channel, PDSCH, associated with the MBS, based on the G-RNTI and the search space information associated with the BWP; and
receiving, from the base station via the PDSCH, downlink data associated with the MBS, based on the scheduling information.

2. The method of claim 1, wherein the RRC reconfiguration message further includes information associated with a radio bearer for the MBS.

3. The method of claim 1, wherein the search space information is used to monitor the scheduling information for the PDSCH associated with the MBS.

4. The method of claim 3, wherein the search space information is associated with at least one downlink control information, DCI, format for the MBS.

5. The method of claim 1, wherein the G-RNTI is configured for a cell group.

6. The method of claim 1, further comprising:
transmitting, to the base station, an RRC reconfiguration complete message, based on the RRC reconfiguration message.

7. A method performed by a base station in a wireless communication system, the method comprising:
transmitting, to a user equipment, UE, a radio resource control, RRC, reconfiguration message including information indicating a group-radio network temporary identifier, G-RNTI, for a multicast and broadcast service, MBS, wherein the RRC reconfiguration message includes information indicating a bandwidth part, BWP, configured for the MBS, and search space information related to the MBS, and the search space information is associated with the BWP;
transmitting, to the UE, scheduling information for a physical downlink shared channel, PDSCH, associated with the MBS, wherein the scheduling information is associated with the G-RNTI and the search space information associated with the BWP; and
transmitting, to the UE via the PDSCH, downlink data associated with the MBS, based on the scheduling information.

8. The method of claim 7, wherein the RRC reconfiguration message further includes information associated with a radio bearer for the MBS.

9. The method of claim 7, wherein the search space information is used to monitor the scheduling information for the PDSCH associated with the MBS.

10. The method of claim 9, wherein the search space information is associated with at least one downlink control information, DCI, format for the MBS.

11. The method of claim 7, wherein the G-RNTI is configured for a cell group.

12. The method of claim 7, further comprising:
receiving, from the UE, an RRC reconfiguration complete message, based on the RRC reconfiguration message.

13. A user equipment, UE, for a wireless communication system, the UE comprising:
a transceiver; and
at least one processor coupled to the transceiver and configured to:
receive, from a base station via the transceiver, a radio resource control, RRC, reconfiguration message including information indicating a group-radio network temporary identifier, G-RNTI, for a multicast and broadcast service, MBS, wherein the RRC reconfiguration message includes information indicating a bandwidth part, BWP, configured for the MBS, and search space information related to the MBS, and the search space information is associated with the BWP;
identify scheduling information for a physical downlink shared channel, PDSCH, associated with the MBS, based on the G-RNTI and the search space information associated with the BWP; and
receive, from the base station via the transceiver and the PDSCH, downlink data associated with the MBS, based on the scheduling information.

## Patentansprüche

1. Verfahren, das von einem Benutzergerät, UE, in einem drahtlosen Kommunikationssystem ausgeführt wird, wobei das Verfahren Folgendes umfasst:
Empfangen einer Radio Resource Control(RRC)-Neukonfigurationsnachricht, die Informationen enthält, die eine temporäre Gruppenfunknetzkennung, G-RNTI, für einen Multicast- und Broadcast-Dienst, MBS, anzeigen, von einer Basisstation, wobei die RRC-Neukonfigurationsnachricht Informationen, die einen für den MBS konfigurierten Bandbreitenteil, BWP, anzeigen, und Suchrauminformationen in Bezug auf den MBS enthält und die Suchrauminformationen mit dem BWP assoziiert sind;
Identifizieren von Planungsinformationen für einen mit dem MBS assoziierten gemeinsam genutzten physikalischen Downlink-Kanal, PDSCH, basierend auf der G-RNTI und den mit dem BWP assoziierten Suchrauminformationen; und
Empfangen mit dem MBS assoziierter Downlink-Daten basierend auf den Planungsinformationen über den PDSCH von der Basisstation.

2. Verfahren nach Anspruch 1, wobei die RRC-Neukonfigurationsnachricht ferner Informationen enthält, die mit einem Funkträger für den MBS assoziiert sind.

3. Verfahren nach Anspruch 1, wobei die Suchrauminformationen zum Überwachen der Planungsinformationen für den mit dem MBS assoziierten PDSCH verwendet werden.

4. Verfahren nach Anspruch 3, wobei die Suchrauminformationen mit mindestens einem Downlink-Steuerungsinformations(DCI)-Format für den MBS assoziiert sind.

5. Verfahren nach Anspruch 1, wobei die G-RNTI für eine Zellgruppe konfiguriert ist.

6. Verfahren nach Anspruch 1, das ferner Folgendes umfasst:
Übertragen einer RRC-Neukonfigurations-Abschlussnachricht basierend auf der RRC-Neukonfigurationsnachricht an die Basisstation.

7. Verfahren, das von einer Basisstation in einem drahtlosen Kommunikationssystem ausgeführt wird, wobei das Verfahren Folgendes umfasst:
Übertragen einer Radio Resource Control(RRC)-Neukonfigurationsnachricht, die Informationen enthält, die eine temporäre Gruppenfunknetzkennung, G-RNTI, für einen Multicast- und Broadcast-Dienst, MBS, anzeigen, an ein Benutzergerät, UE, wobei die RRC-Neukonfigurationsnachricht Informationen, die einen für den MBS konfigurierten Bandbreitenteil, BWP, anzeigen, und Suchrauminformationen in Bezug auf den MBS enthält und die Suchrauminformationen mit dem BWP assoziiert sind;
Übertragen von Planungsinformationen für einen mit dem MBS assoziierten gemeinsam genutzten physikalischen Downlink-Kanal, PDSCH, wobei die Planungsinformationen mit der G-RNTI und den mit dem BWP assoziierten Suchrauminformationen assoziiert sind, an das UE; und
Übertragen mit dem MBS assoziierter Downlink-Daten basierend auf den Planungsinformationen über den PDSCH an das UE.

8. Verfahren nach Anspruch 7, wobei die RRC-Neukonfigurationsnachricht ferner Informationen enthält, die mit einem Funkträger für den MBS assoziiert sind.

9. Verfahren nach Anspruch 7, wobei die Suchrauminformationen zum Überwachen der Planungsinformationen für den mit dem MBS assoziierten PDSCH verwendet werden.

10. Verfahren nach Anspruch 9, wobei die Suchrauminformationen mit mindestens einem Downlink-Steuerungsinformations(DCI)-Format für den MBS assoziiert sind.

11. Verfahren nach Anspruch 7, wobei die G-RNTI für eine Zellgruppe konfiguriert ist.

12. Verfahren nach Anspruch 7, das ferner Folgendes umfasst:
Empfangen einer RRC-Neukonfigurations-Abschlussnachricht basierend auf der RRC-Neukonfigurationsnachricht von dem UE.

13. Benutzergerät, UE, für ein drahtloses Kommunikationssystem, wobei das UE Folgendes umfasst:
einen Transceiver; und
mindestens einen Prozessor, der mit dem Transceiver gekoppelt und zu Folgendem konfiguriert ist:
Empfangen einer Radio Resource Control(RRC)-Neukonfigurationsnachricht, die Informationen enthält, die eine temporäre Gruppenfunknetzkennung, G-RNTI, für einen Multicast- und Broadcast-Dienst, MBS, anzeigen, über den Transceiver von einer Basisstation, wobei die RRC-Neukonfigurationsnachricht Informationen, die einen für den MBS konfigurierten Bandbreitenteil, BWP, anzeigen, und Suchrauminformationen in Bezug auf den MBS enthält und die Suchrauminformationen mit dem BWP assoziiert sind;
Identifizieren von Planungsinformationen für einen mit dem MBS assoziierten gemeinsam genutzten physikalischen Downlink-Kanal, PDSCH, basierend auf der G-RNTI und den mit dem BWP assoziierten Suchrauminformationen; und
Empfangen mit dem MBS assoziierter Downlink-Daten basierend auf den Planungsinformationen über den Transceiver und den PDSCH von der Basisstation.

## Revendications

1. Procédé exécuté par un équipement utilisateur, UE, dans un système de communication sans fil, le procédé comprenant :
recevoir, d'une station de base, un message de reconfiguration de contrôle de ressources radio, RRC, incluant des informations indiquant un identifiant temporaire de réseau radio de groupe, G-RNTI, pour un service de multidiffusion et de diffusion, MBS, où le message de reconfiguration RRC inclut des informations indiquant une partie de bande passante, BWP, configurée pour le MBS, et des informations d'espace de recherche liées au MBS, et les informations d'espace de recherche sont associées à la BWP ;
identifier des informations de programmation pour un canal partagé de liaison descendante physique, PDSCH, associé au MBS, sur la base du G-RNTI et des informations d'espace de recherche associées à la BWP, et
recevoir, de la station de base via le PDSCH, des données de liaison descendante associées au MBS, sur la base des informations de programmation.

2. Procédé selon la revendication 1, où le message de reconfiguration RRC inclut en outre des informations associées à un support radio pour le MBS.

3. Procédé selon la revendication 1, où les informations d'espace de recherche sont utilisées pour surveiller les informations de programmation pour le PDSCH associé au MBS.

4. Procédé selon la revendication 3, où les informations d'espace de recherche sont associées à au moins un format d'informations de commande de liaison descendante, DCI, pour le MBS.

5. Procédé selon la revendication 1, où le G-RNTI est configuré pour un groupe de cellules.

6. Procédé selon la revendication 1, comprenant en outre :
transmettre, à la station de base, un message d'achèvement de reconfiguration RRC, sur la base du message de reconfiguration RRC.

7. Procédé exécuté par une station de base dans un système de communication sans fil, le procédé comprenant :
transmettre, à un équipement utilisateur, UE, un message de reconfiguration de contrôle de ressources radio, RRC, incluant des informations indiquant un identifiant temporaire de réseau radio de groupe, G-RNTI, pour un service de multidiffusion et de diffusion, MBS, où le message de reconfiguration RRC inclut des informations indiquant une partie de bande passante, BWP, configurée pour le MBS, et des informations d'espace de recherche liées au MBS, et les informations d'espace de recherche sont associées à la BWP ;
transmettre, à l'UE, des informations de programmation pour un canal partagé de liaison descendante physique, PDSCH, associé au MBS, où les informations de programmation sont associées au G-RNTI et aux informations d'espace de recherche associées à la BWP; et
transmettre, à l'UE via le PDSCH, des données de liaison descendante associées au MBS, sur la base des informations de programmation.

8. Procédé selon la revendication 7, où le message de reconfiguration RRC inclut en outre des informations associées à un support radio pour le MBS.

9. Procédé selon la revendication 7, où les informations d'espace de recherche sont utilisées pour surveiller les informations de programmation pour le PDSCH associé au MBS.

10. Procédé selon la revendication 9, où les informations d'espace de recherche sont associées à au moins un format d'informations de commande de liaison descendante, DCI, pour le MBS.

11. Procédé selon la revendication 7, où le G-RNTI est configuré pour un groupe de cellules.

12. Procédé selon la revendication 7, comprenant en outre :
recevoir, de l'UE, un message d'achèvement de reconfiguration RRC, sur la base du message de reconfiguration RRC.

13. Équipement utilisateur, UE, pour un système de communication sans fil, l'UE comprenant :
un émetteur-récepteur ; et
au moins un processeur couplé à l'émetteur-récepteur et configuré pour :
recevoir, d'une station de base via l'émetteur-récepteur, un message de reconfiguration de contrôle de ressources radio, RRC, incluant des informations indiquant un identifiant temporaire de réseau radio de groupe, G-RNTI, pour un service de multidiffusion et de diffusion, MBS, où le message de reconfiguration RRC inclut des informations indiquant une partie de bande passante, BWP, configurée pour le MBS et des informations d'espace de recherche liées au MBS, et les informations d'espace de recherche sont associées à la BWP ;
identifier des informations de programmation pour un canal partagé de liaison descendante physique, PDSCH, associé au MBS, sur la base du G-RNTI et des informations d'espace de recherche associées à la BWP ; et
recevoir, de la station de base via l'émetteur-récepteur et le PDSCH, des données de liaison descendante associées au MBS, sur la base des informations de programmation.
